# EUROPÄISCHE PATENTSCHRIFT

(11) **EP 0 483 651 B1**
(45) Veröffentlichungstag und Bekanntmachung des Hinweises auf die Patenterteilung: **28.12.1994**
(21) Anmeldenummer: 91118023.0
(22) Anmeldetag: 23.10.1991
(51) Int. Cl.: B60F 1/04

(54) **Fahrgestell mit Schienenrädern zur Montage an ein Strassenfahrzeug**
Chassis with rail wheels for mounting onto a road vehicle
Châssis avec des roues par rails pour le montage sur un véhicule routier

(30) Priorität: 29.10.1990 CH 3440/90
(43) Veröffentlichungstag der Anmeldung: 06.05.1992
(73) Patentinhaber: STADLER-FAHRZEUGE AG, CH-9565 Bussnang (CH)
(72) Erfinder: Spuhler, Peter C., CH-9565 Bussnang (CH)
(74) Vertreter: Blum, Rudolf Emil Ernst

(56) Entgegenhaltungen:
- FR-A- 793 220
- FR-A- 2 377 311
- US-A- 2 986 102

## Beschreibung

Die Erfindung betrifft ein Fahrgestell mit Schienenrädern für die Montage an ein Strassentransportfahrzeug zur Ausbildung eines wahlweise strassen- und schienentauglichen Zweiwegfahrzeugs. Es ist bekannt, Strassenfahrzeuge mit heb- und senkbaren Schienenrädern auszustatten, um sie als sogenannte Zweiweg-Fahrzeuge sowohl auf Schienen, als auch auf der Strasse einzusetzen. Entsprechende Konstruktionen sind z.B. in der CH-PS 668 946 und 669 933 beschrieben.

Bei den bekannten Anordnungen ist - trotz gegenteiligen Bemühungen - der Umbau eines Strassentransportfahrzeugs in ein Zweiweg-Fahrzeug aufwendig und zeitraubend. Entsprechend ist es auch aufwendig, den Umbau wieder rückgängig zu machen, um das Fahrzeug wieder normal einzusetzen. Solche Zweiweg-Fahrzeuge bleiben deshalb in der Regel während ihrer ganzen Lebensdauer Spezialfahrzeuge. Dies auch deshalb, weil im Zusammenhang mit dem Zweiwegbetrieb weitere Aufbauten, wie Hubplattformen etc. darauf montiert sind. Dazu kommt, dass bei den bekannten Lösungen auch die Anpassung an verschiedene Gleis-Spurbreiten einen Umbau erforderlich machen, so dass diese Fahrzeuge in der Praxis auf eine bestimmte Spurbreite festgelegt sind.

Es stellt sich auf diesem Hintergrund die Aufgabe, ein Fahrgestell für den eingangs erwähnten Zweck so zu gestalten, dass sich damit ein Strassentransportfahrzeug in kurzer Zeit in ein Zweiweg-Fahrzeug einschliesslich der entsprechenden Aufbauten verwandeln und bei Bedarf ebenso schnell in ein reines Strassentransportfahrzeug zurück verwandeln lässt.

Diese Aufgabe wird durch ein Fahrgestell mit den Merkmalen gelöst, die in den Patentansprüchen definiert sind.

Das Fahrgestell bildet eine weitgehend autonome Einheit, die sich als Gesamtes über das Chassis des Strassentransportfahrzeugs stülpen lässt. Die Aufbauten sind dabei vorzugsweise auf die Plattform des Fahrgestells montiert und können deshalb mit dem Fahrgestell zusammen angebracht und entfernt werden. Die beanspruchte Lösung gestattet es auch, die Spurbreite der Schienenräder auf einfache Weise zu verändern, da dies unabhängig von der Struktur des Strassentransportfahrzeugs selbst erfolgen kann.

Gemäss einem Ausführungsbeispiel der Erfindung ist es auch möglich, das Fahrgestell als autonomes Schienenfahrzeug einzusetzen.

Nachfolgend sollen nun anhand der Zeichnungen Ausführungsbeispiele des beanspruchten Fahrgestells näher erläutert werden.

Darin zeigen
Figur 1 eine Seitenansicht eines mit dem Fahrgestell ausgerüsteten Zweiweg-Fahrzeugs im Schienenbetrieb;
Figur 2 eine Aufsicht auf das Fahrzeug gemäss Fig. 1;
Figur 3 eine Frontansicht des Fahrzeugs im Strassenbetrieb;
Figur 4 eine Rückansicht des Fahrzeugs im Schienenbetrieb;
Figur 5 eine Detailansicht eines Stützfusses im ausgeschwenkten Zustand;
Figur 6 eine Schnittansicht entlang der Linie VI - VI in Fig. 5, wobei unterschiedliche Spurstellungen bei aufgeschwenkten Schienenrädern angedeutet sind;
Figur 7 eine Schnittansicht entlang der Linie VII - VII in Fig. 5;
Figur 8 eine Detailansicht eines Stützfusses in eingeschwenktem Zustand, und
Figur 9 das Fahrgestell als autonome Einheit.

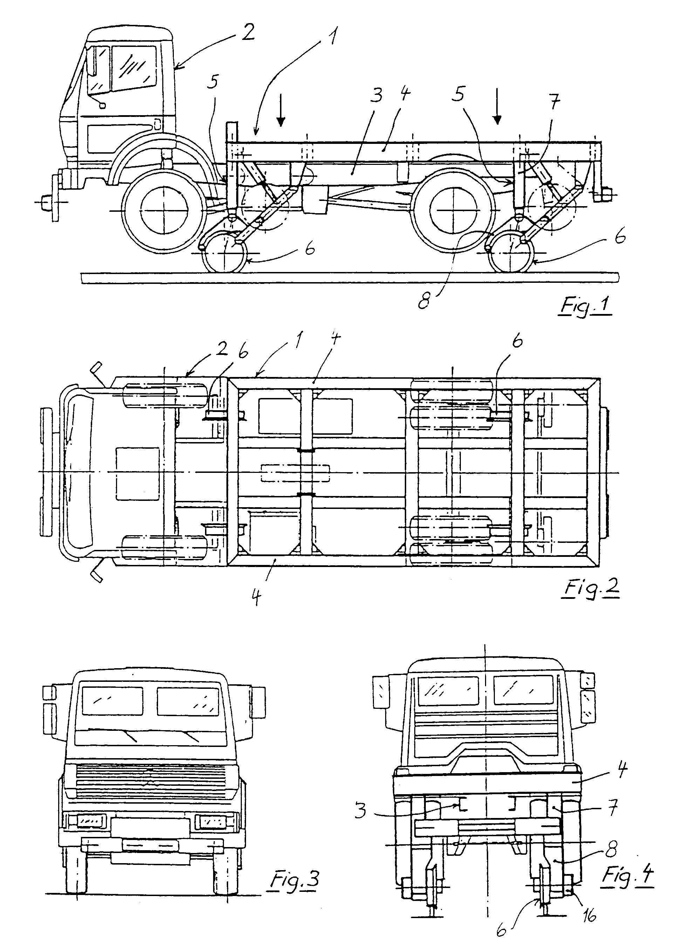

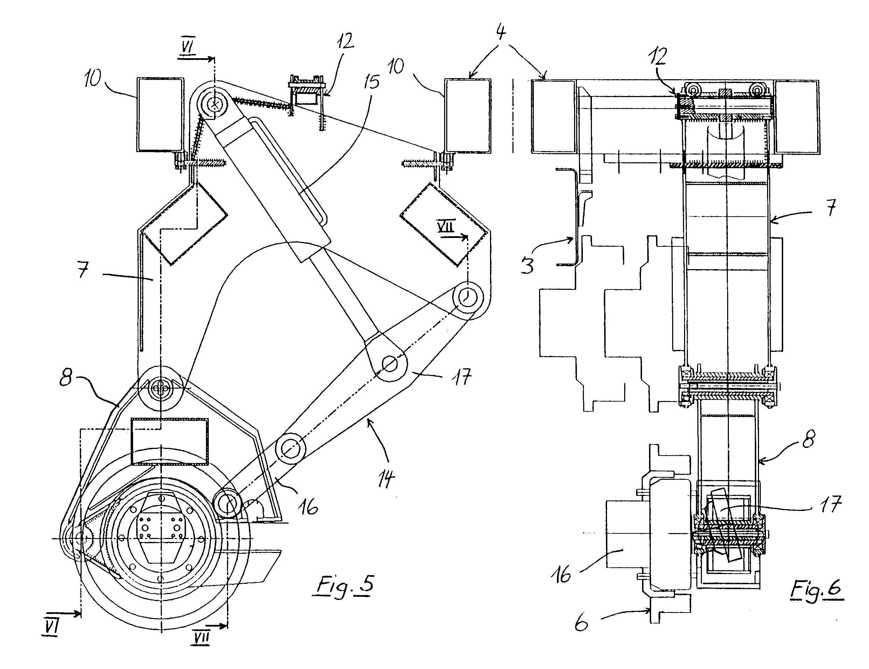

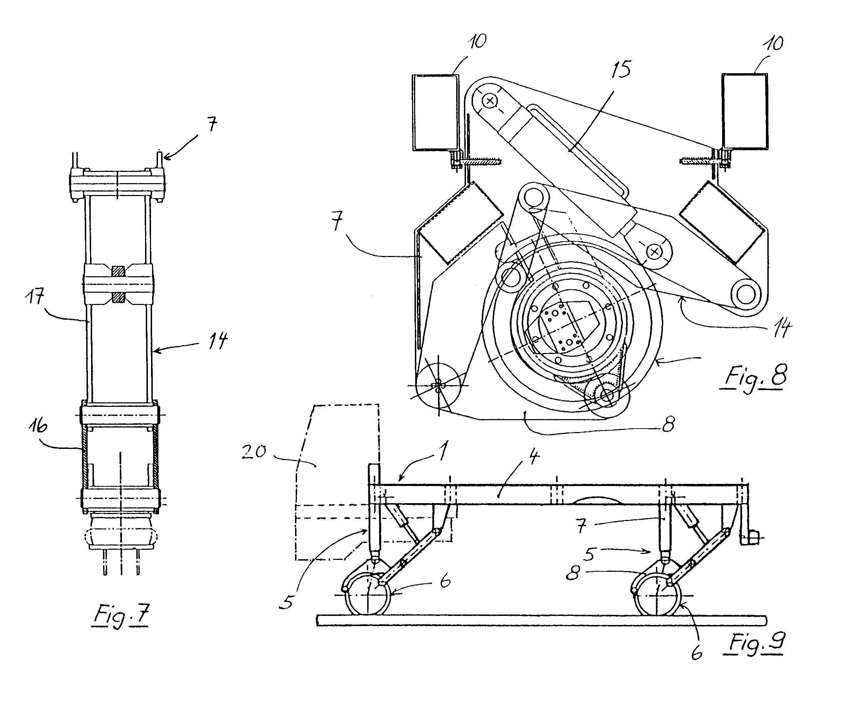

Das der Erfindung zugrunde liegende Bauprinzip lässt sich zunächst am einfachsten durch Vergleich der Figuren 1 und 2 mit Figur 9 ersehen. Die Figuren 1 und 2 zeigen das gemäss der Erfindung ausgestaltete Fahrgestell 1 im montierten Zustand an einem Strassentransportfahrzeug bzw. Lastwagen 2 und zwar im Schienenbetrieb. In Figur 9 ist im wesentlichen dasselbe Fahrgestell 1 für sich allein dargestellt, wie es als Einheit mit dem Strassentransportfahrzeug kombiniert werden kann. Dazu wird das Fahrgestell 1 als Ganzes von oben über das Chassis des Lastwagens 2 gestülpt, wie in Fig. 1 mit Pfeilen angedeutet ist, und an dessen Längsträgern 3 wie eine Ladebrücke befestigt. Das Fahrgestell 1 besitzt zu diesem Zweck einen Plattformteil 4, der als steifer Rahmen im Format etwa einer Ladebrücke ausgebildet ist. Der Plattformteil 4 kann zugleich als Ladebrücke des Zweiweg-Fahrzeugs und/oder als Montageplattform für Aufbauten, wie z.B. einer Hubplattform, verwendet werden. Die Aufbauten sind also nicht direkt am Lastwagen bzw. seinem Chassis angebracht. Sie können damit durch einfaches Demontieren des Fahrgestells entfernt bzw. mit dem Fahrgestell zusammen gegen andere Aufbauten ausgetauscht werden.

Am Plattformteil 4 sind vier Stützfüsse 5 mit je einem Schienenrad 6 vorgesehen. Jeder der Stützfüsse 5 setzt sich aus einer mit dem Rahmen des Plattformteils 4 verbundenen Tragstütze 7 und einer daran hochschwenkbaren Schienenradeinheit 8 zusammen. Wesentlich ist dabei, dass jedes der Schienenräder 6 vom jeweils gegenüber liegenden Schienenrad unabhängig ist. Insbesondere sind sie nicht mittels einer Achse verbunden. Das Fahrgestell 1 besitzt damit in Fahrzeuglängsrichtung einen jochartigen Aufbau und kann, wie bereits erwähnt, als Ganzes von oben über die Chassis-Längsträger 3 des Lastwagens gestülpt werden. Die vier Stützfüsse 5 sind dabei als identische Einheiten ausgebildet, was einen modularen Aufbau ermöglicht.

Nachfolgend wird nun anhand der Figuren 5 bis 8 der Aufbau dieser Sützfüsse im Detail erläutert. Dabei ist zu beachten, dass die Figuren 1 und 9 lediglich schematische Darstellungen sind, die deshalb nicht in allen Einzelheiten mit den Ausführungen übereinstimmen, die in den Figuren 5 bis 8 gezeigt sind.

Die Tragstütze 7 jedes Fusses ist am Rahmen des Plattformteils befestigt und zwar an zwei Querbalken 10. Wie aus Fig. 6 ersichtlich ist, lässt sich die Tragstütze in zwei verschiedenen Lagen quer zur Fahrzeuglängsrichtung anordnen, die unterschiedlichen Gleisspurweiten entsprechen. Eine Umstellung zwischen den Spurweiten kann sehr einfach durchgeführt werden, indem die Tragstützen 7 nach dem Lösen der Befestigungsschrauben an einer Führung 12 seitlich verschoben und in der neuen Lage wieder angeschraubt werden können.

Bei jedem Fuss ist eine identische Schienenradeinheit 8 über einen Schwenkhebelmechanismus 14 mit der Tragstütze 7 verbunden. Der Schwenkhebelmechanismus 14 besteht aus zwei gelenkig zwischen der Schienenradeinheit 8 und der Tragstütze 7 angeordneten Hebeln 16, 17, von denen der innere Hebel 17 von einem Hydraulikzylinder 15 betätigbar ist, um die Schienenradeinheit 8 für den Strassenbetrieb nach hinten hochzuschwenken, wie dies in Fig. 8 gezeigt ist (vergleiche auch Fig. 1). Wie ersichtlich, gestattet diese Konstruktion eine Höhenverstellung von ca. 50 % der Gesamthöhe der Stützfüsse. Im heruntergeschwenkten Zustand, wie er aus Fig. 5 ersichtlich ist, sind die Hebel 16, 17 gestreckt und bilden mit der Tragstütze ein Dreieck, das die Lastkräfte im Schienenbetrieb in mechanisch definierter Weise und ohne Belastung des Hydraulikzylinders 15 aufnimmt.

Zum Aufgleisen fährt das Zweiweg-Fahrzeug mit hochgeschwenkten Schienenrädern über ein Geleise, wonach die Schienenräder in einer ersten Phase zunächst auf die Geleise heruntergeschwenkt werden. Danach wird durch weiteres Verschwenken das Strassentransportfahrzeug 2 angehoben, wie in Fig. 1 und 4 gezeigt. Der beschriebene Schwenkhebelmechanismus ist so ausgebildet, dass in der zweiten Anhebephase eine optimale Uebersetzung der Kraft des Hydraulikkolbens in die Hubkraft vorliegt, während in der ersten Phase eine relativ rasche Verschwenkung erfolgt.

Die einzelnen Schienenradeinheiten 8 dienen im herabgeschwenkten Zustand als Antriebe für das Zweiweg-Fahrzeug. Sie sind voneinander unabhängig, indem jede einen eigenen Hydraulikmotor 16 besitzt. Die Hydraulikmotoren 16 der Schienenradeinheiten 8 sind mit einer Hydraulikpumpe verbunden, die am Plattformteil 4 angeordnet (nicht dargestellt) und an einen Nebenabtrieb des Motors des Strassenfahrzeugs kuppelbar ist.

Jede Schienenradeinheit ist ferner mit einer Bremsanlage 17 versehen.

Der Antrieb des Zweiweg-Fahrzeugs erfolgt im Schienenbetrieb also vollständig über die einzelnen Schienenräder. Die Fahrzeugreifen sind von den Geleisen abgehoben, was durch den grossen Hub der Stützfüsse ermöglicht wird.

Wie bereits erwähnt, bildet das Fahrgestell 1 einschliesslich allfälligen Aufbauten auf der Plattform 4 eine Einheit, die als Ganzes an einem Strassentransportfahrzeug montiert bzw. davon demontiert werden kann. Die Montagearbeiten beschränken sich dabei im wesentlichen auf das Ankuppeln der Hydraulikaggregate an den Fahrzeugmotor und auf das Befestigen des Plattformteils 4 des Fahrgestells an die Längsträger 3 des Fahrzeugchassis. Diese Befestigung (nicht gezeigt) erfolgt so, dass sie leicht lösbar ist. Der gesamte Montageaufwand liegt zeitlich im Bereich einer normalen Fahrzeugwartung.

Die Ausgestaltung des Fahrgestells 1 als autonome Einheit ermöglicht es, dieses auch zeitweise für sich allein als Schienenfahrzeug einzusetzen. Dies ist insbesondere interessant, um entsprechende Aufbauten auch ohne ein Strassentransportfahrzeug 2 zu nutzen, falls die Arbeiten ausschliesslich im Gleisbereich stattfinden. Dabei kann das Fahrgestell als Anhänger eines Schienentraktors oder durch Anbau einer Motor- und Bedienungseinheit 20 (vergl. schematisch Fig. 9) als selbstfahrendes Schienenfahrzeug ausgebildet sein.

## Patentansprüche

1. Fahrgestell mit Schienenrädern für die Montage an einem Strassentransportfahrzeug zur Ausbildung eines wahlweise strassen- und schienentauglichen Zweiweg-Fahrzeugs, dadurch gekennzeichnet, dass das Fahrgestell (1) einen Plattformteil (4) besitzt, an welchem höhenverstellbare Stützfüsse (5) angeordnet sind, die je ein Schienenrad (6) tragen, wobei jeweils sich gegenüber liegende Schienenräder achsunverbunden sind, so dass das Fahrgestell als ganzes jochartig über das Chassis (3) des Strassentransportfahrzeugs stülpbar ist.

2. Fahrgestell nach Anspruch 1, dadurch gekennzeichnet, dass der Plattformteil (4) als starrer Rahmen für die Kraftübertragung von den Stützfüssen (5) auf das Chassis (3) des Strassentransportfahrzeugs ausgebildet ist.

3. Fahrgestell nach einem der vorangehenden Ansprüche, dadurch gekennzeichnet, dass der Plattformteil (4) als Arbeits- oder als Montageplattform für weitere Aufbauten ausgebildet ist.

4. Fahrgestell nach einem der vorangehenden Ansprüche, dadurch gekennzeichnet, dass an jedem Stützfuss (5) eine Antriebs- und Bremseinheit (16, 17) für das entsprechende Schienenrad (6) vorgesehen ist.

5. Fahrgestell nach Anspruch 4, dadurch gekennzeichnet, dass als Antriebseinheit Hydraulikmotoren (16) vorgesehen sind, welche an eine gemeinsame Hydraulikpumpe angeschlossen sind.

6. Fahrgestell nach Anspruch 5, dadurch gekennzeichnet, dass die gemeinsame Hydraulikpumpe im Plattformteil (4) angeordnet ist, und an eine Abtriebswelle des Motors des Strassentransportfahrzeugs (2) anschliessbar ist.

7. Fahrgestell nach einem der vorangehenden Ansprüche, dadurch gekennzeichnet, dass jeder der höhenverstellbaren Stützfüsse (5) eine am Plattformteil angeordnete Tragstütze (7) und eine daran schwenkbare angelenkte Schienenradeinheit (8) besitzt.

8. Fahrgestell nach Anspruch 7, dadurch gekennzeichnet, dass zum Verschwenken jeder Schienenradeinheit (8) eine durch eine Hydraulik (15) betätigbare Hebelanordnung (14) vorgesehen ist, derart, dass die Hydraulik (15) bei voll ausgefahrener Schienenradeinheit im wesentlichen unbelastet ist.

9. Fahrgestell nach Anspruch 8, dadurch gekennzeichnet, dass die Hebelanordnung (14) eine Uebersetzungswirkung aufweist, derart, dass die von der Hydraulik (15) auf die Schienenradeinheit (8) ausübbare Kraft mit zunehmender Ausschwenkung zunimmt.

10. Fahrgestell nach einem der vorangehenden Ansprüche, dadurch gekennzeichnet, dass jeder Stützfuss (5) am Plattformteil (4) seitlich verschiebbar angeordnet ist, so dass das Fahrgestell auf verschiedene Gleis-Spurbreiten einstellbar ist.

## Claims

1. Undercarriage with rail wheels for being mounted on a street transport vehicle for forming a two purpose vehicle selectively suited for streets and rails, characterized in that the undercarriage (1) comprises a platform part (4), on which platform part hight-adjustable support feet (5) are arranged, which support feet each carry a rail wheel (6), wherein rail wheels lying opposite each other are not joined by an axle, such that the undercarriage can be put over the chassis (3) of the street transport vehicle as a whole in yoke-like fashion.

2. Undercarriage according to claim 1, characterized in that the platform part (4) is designed as a rigid frame for force transmission from the support feet (5) to the chassis (3) of the street transport vehicle.

3. Undercarriage according to one of the preceding claims, characterized in that the platform part (4) is designed as working or mounting platform for further structures.

4. Undercarriage according to one of the preceding claims, characterized in that a driving and braking unit (16, 17) for the corresponding rail wheel (6) is provided on each support foot (5).

5. Undercarriage according to claim 4, characterized in that hydraulic motors (16) are provided as driving unit, which are connected to a common hydraulic pump.

6. Undercarriage according to claim 5, characterized in that the common hydraulic pump is arranged in the platform part (4) and can be connected to a driving shaft of the street transport vehicle (2).

7. Undercarriage according to one of the preceding claims, characterized in that each of the hight-adjustable support feet (5) comprises a support leg (7) arranged on the platform part and a rail wheel unit (8) pivotally mounted thereon.

8. Undercarriage according to claim 7, characterized in that a lever assembly (14) operatable by hydraulics (15) is provided for pivoting each rail wheel unit (8) such that the hydraulics (15) are substantially without load when the rail wheel unit is fully extended.

9. Undercarriage according to claim 8, characterized in that the lever assembly (14) has a lever action such that the force that can be exerted by the hydraulics to the rail wheel unit (8) increases with increasing extension.

10. Undercarriage according to one of the preceding claims, characterized in that each support foot (5) is arranged on the platform part (4) in a laterally displaceable manner, such that the undercarriage is adjustable for various track widths.

## Revendications

1. Châssis roulant équipé de roues de chemin de fer, destiné à être monté sur un véhicule de transport routier pour former un véhicule ambivalent capable de circuler au choix sur route et sur rail, caractérisé en ce que le châssis roulant (1) possède une partie plate-forme (4) sur laquelle sont agencées des jambes d'appui (5) réglables en hauteur, dont chacune porte une roue de chemin de fer (6), les roues de chemin de fer mutuellement opposées n'étant pas reliées par un essieu, de sorte que le châssis roulant peut être emboîté comme un seul bloc sur le châssis (3) du véhicule de transport routier, à la façon d'un arceau.

2. Châssis roulant selon la revendication 1, caractérisé en ce que la partie plate-forme (4) est construite sous la forme d'un cadre rigide destiné à transmettre les efforts des jambes d'appui (5) au châssis (3) du véhicule de transport routier.

3. Châssis roulant selon une des revendications précédentes, caractérisé en ce que la partie plate-forme (4) est réalisée sous la forme d'une plate-forme de travail ou de montage pour recevoir d'autres superstructures.

4. Châssis roulant selon une des revendications précédentes, caractérisé en ce qu'à chaque jambe d'appui (5), est prévue une unité d'entraînement et de freinage (16, 17) agissant sur la roue de chemin de fer (6) correspondante.

5. Châssis roulant selon la revendication 4, caractérisé en ce qu'il est prévu comme unité d'entraînement des moteurs hydrauliques (16) qui sont reliés à une pompe hydraulique commune.

6. Châssis roulant selon la revendication 5, caractérisé en ce que la pompe hydraulique commune est agencée dans la partie plate-forme (4) et peut être accouplée à un arbre de prise de force du moteur du véhicule de transport routier (2).

7. Châssis roulant selon une des revendications précédentes, caractérisé en ce que chacune des jambes d'appui (5) réglables en hauteur possède une console porteuse (7) montée sur la partie plate-forme et une unité roue de chemin de fer articulée à cette console de manière à pouvoir pivoter.

8. Châssis roulant selon la revendication 7, caractérisé en ce que, pour faire pivoter chaque unité de roue de chemin de fer (8), il est prévu un dispositif à leviers (14) pouvant être actionné par un mécanisme hydraulique (15) de telle manière que le mécanisme hydraulique (15) soit sensiblement déchargé lorsque l'unité de roue de chemin de fer est en extension complète.

9. Châssis roulant selon la revendication 8, caractérisé en ce que le dispositif à leviers (14) possède un effet de transformation du mouvement qui est tel que la force qui peut être exercée sur l'unité de roue de chemin de fer (8) par le mécanisme hydraulique (15) croisse avec l'accroissement de l'excursion de pivotement.

10. Châssis roulant selon une des revendications précédentes, caractérisé en ce que chaque jambe d'appui (5) est agencée mobile en translation latérale sur la partie plate-forme (4), de sorte que le châssis roulant peut ainsi être réglé sur différentes largeurs d'écartement de voies.
